Europäisches Patentamt

(19) European Patent Office

Office européen des brevets

(11) Veröffentlichungsnummer: **0 113 424**

**A2**

(12) # EUROPÄISCHE PATENTANMELDUNG

(21) Anmeldenummer: 83111941.7

(22) Anmeldetag: 10.03.80

(51) Int. Cl.³: **G 05 D 3/20**
**G 05 B 19/23**

(43) Veröffentlichungstag der Anmeldung:
18.07.84 Patentblatt 84/29

(84) Benannte Vertragsstaaten:
IT

(60) Veröffentlichungsnummer der früheren
Anmeldung nach Art. 76 EPÜ: **0 035 580**

(71) Anmelder: Optimetrix Corporation
500 Ellis Street
Mountain View California 94043(US)

(72) Erfinder: Phillips, Edward H.
P.O. Box 1042
Middletown, CA 95461(US)

(72) Erfinder: Rauskolb, Rüdiger F.
Drosselweg 3
D-2080 Pinneberg(DE)

(74) Vertreter: Liesegang, Roland, Dr.-Ing.
Sckellstrasse 1
D-8000 München 80(DE)

(54) Positionsregelschaltung.

(57) Eine Positionsregelschaltung umfaßt eine erste Vorrichtung (116) zum Erzeugen einer Phasendifferenz zwischen einem Referenzsignal und einem darauf bezogenen Eingangssignal, das durch ein Regelsignal bestimmt ist, und eine zweite, mit der ersten Vorrichtung gekoppelte Vorrichtung zum Erzeugen eines Positionsregelsignals, das proportional zur Phasendifferenz zwischen dem Referenzsignal und dem Eingangssignal ist.

EP 0 113 424 A2

./...

FIG. 3

Telex 5214382 pali d
Telekopierer (089) 272 04 80, 272 04 81
Telegramme patemus münchen

Postscheck München 39418-802
Hypobank München 6400194 333
Reuschelbank München 2603007

OPTIMETRIX CORPORATION
Ausscheidung aus 80 101 195.8
EU 140 31

Positionsregelschaltung

Die Erfindung betrifft eine Positionsregelschaltung, welche einen bezüglich der Phase verriegelten Regelkreis enthält, um das Auflösungsvermögen der Positionsregelschaltung zu vergrößern.

Derartige Positionsregelschaltungen können beispielsweise zur Regelung der Position der Plattform eines interferometrisch geregelten Werktisches verwendet werden, wie er in der Stammanmeldung 80 101 195.8 beschrieben ist. Herkömmliche Positionsregelschaltungen zum Regeln der Position eines interferometrisch geregelten Tisches verwenden typischerweise einen reversiblen Zähler, um eine Anzeige über die tatsächliche Position des Tisches zu erhalten (US-A 3 458 259). Das Auflösungsvermögen solcher Positionsregelschaltungen ist üblicherweise begrenzt durch die Mehrdeutigkeit der letzten Stelle bzw. der Stelle mit dem tiefsten Stellenwert, die durch den Zähler angezeigt wird.

Aufgabe der Erfindung ist es, eine verbesserte Positionsregelschaltung zu schaffen, bei welcher die Mehrdeutigkeit der letzten, d. h. mit geringster Stellenwertigkeit behafteten, durch den Zähler angezeigten Stelle vermieden und das Auflösungsvermögen vergrößert ist.

Diese Aufgabe wird gemäß der Erfindung durch eine Positionsregelschaltung gelöst, bei welcher eine erste Vorrichtung zum Erzeugen einer Phasendifferenz zwischen einem Referenzsignal und einem darauf bezogenen Eingangssignal, das durch ein Regelsignal bestimmt ist, und eine zweite, mit der ersten Vorrichtung gekoppelte Vorrichtung zum Erzeugen eines Positionsregelsignales, das proportional zur Phasendifferenz zwischen dem Referenzsignal und dem Eingangssignal ist, vorgesehen sind.

Gemäß einer bevorzugten Ausführungsform der Erfindung wird eine Positionsregelschaltung mit einem verstellbaren Phasenschieber verwendet, der auf ein Eingangsreferenzsignal und ein Regelsignal anspricht, um ein Ausgangssignal der gleichen Frequenz wie das Referenzsignal zu erzeugen, wobei das Ausgangssignal jedoch nach Maßgabe des Regelsignales bezüglich der Phase verschoben ist. Hierzu wird vorteilhaft ein Phasendetektor verwendet, der durch das Ausgangssignal des veränderbaren Phasenschiebers und ein Eingangsmeßsignal mit einer Frequenz gesteuert wird, die auf die Frequenz des Eingangsreferenzsignales derart bezogen ist, daß ein Positionsregelsignal erzeugt wird, welches das Auflösungsvermögen der Positionsregelschaltung vergrößert. Der Phasenschieber enthält einen anderen Phasendetektor, der auf das Eingangsreferenzsignal und ein Ausgangssignal von einer durch N teilenden Schaltung anspricht und einen spannungsgesteuerten Oszillator speist, welcher an eine Teilerschaltung ein Ausgangssignal mit einer Frequenz abgibt, die N mal größer als die Frequenz des Referenzsignales ist. Ein Schieberegister spricht auf die Ausgangssignale des durch die Spannung gesteuerten Oszillators und der Teilerschaltung an und liefert N Ausgangssignale mit verschiedener Phase an einen Datenwähler. Der Datenwähler spricht auf das Regelsignal an und liefert ein ausgewähltes dieser N Ausgangssignale an den erstgenannten Phasendetektor nach Maßgabe des Regelsignales.

Im folgenden werden bevorzugte Ausführungsformen der Erfindung anhand der Zeichnungen erläutert. Es zeigen:

Figur 1 eine perspektivische rückseitige Ansicht eines interferometrisch geregelten Werkstückes (im folgenden "Stufe" genannt) mit genau rechtwinkligen X- und Y-Bewegungsachsen,

Figur 2 schematisch die Strahlengänge und optische Komponenten der bei der Stufe nach Figur 1 verwendeten Interferometersysteme,

Figur 3 ein Blockdiagramm eines Paares von Positionierungsregelschaltungen zum Treiben der Stufe nach Figur 1,

Figur 4 ein Blockdiagramm eines anderen Paares von Positionierungsregelschaltungen gemäß einer weiteren bevorzugten Ausführungsform, wobei diese Schaltungen beispielsweise anstelle der Positionierungsregelschaltungen von Figur 3 verwendbar sind zum Treiben der interferometrisch geregelten Stufe von Figur 1

Figur 5 ein Blockschaltbild eines Paares von Phasenregelschaltungen einer weiteren Ausführungsform der erfinderischen Ausgestaltung eines zur Positionierungsregelung gemäß Figur 4 verwendbaren Regelschaltkreises.

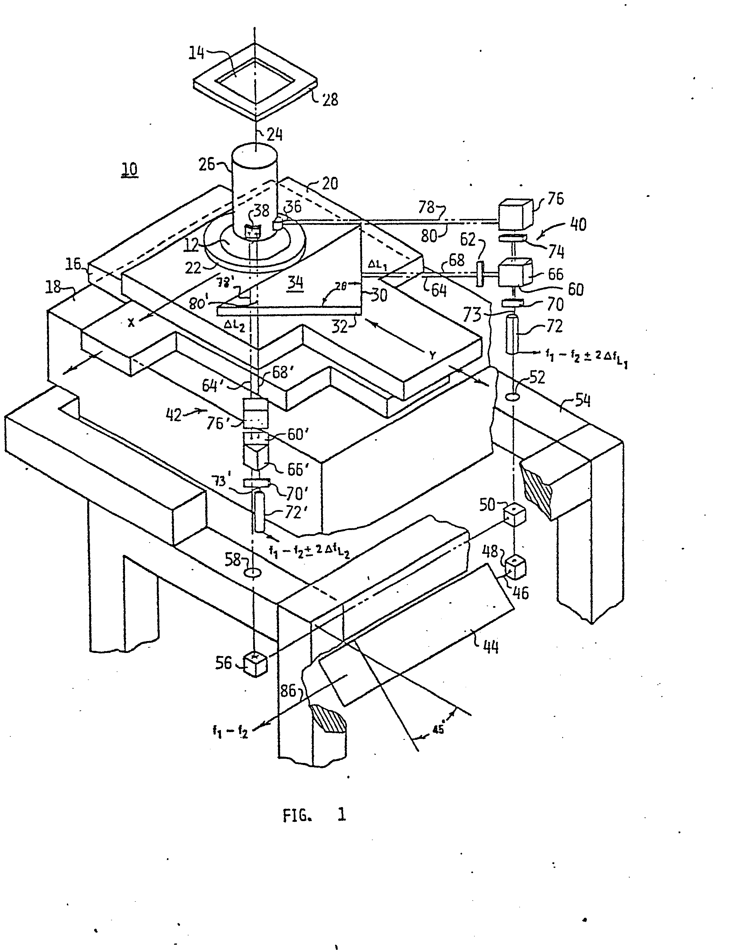

Eine interferometrisch gesteuerte bzw. geregelte Stufe 10 gemäß Figur 1 dient zur Ausrichtung eines Werkstücks, beispielsweise eines Halbleiterplättchens 12, bezüglich eines Gegenstands, beispielsweise eines Fadenkreuzes oder Rahmens 14 oder eines projizierten Abbildes davon. Die Stufe 10 enthält eine untere Plattform 16, die mittels Luftlagern auf der flachen oberen Fläche eines Granitblocks 18 gelagert ist zur allgemeinen Bewegung längs einer X-Achse der Stufe, und eine obere Plattform 20, die mittels Luftlagern auf der flachen oberen Fläche des Granitblocks 18 (durch Ausnehmungen in der unteren Plattform 16) gelagert ist zur allgemeinen Bewegung längs einer rechtwinkligen Y-Achse der Stufe. Zusätzlich ist die obere Plattform 20 mit der unteren Plattform 16 zur gemeinsamen generellen Bewegung längs der X-Achse der Stufe 10 verbunden. Daher kann die obere Plattform 20 der Stufe 10 in einer horizontalen Ebene generell längs der rechtwinkligen X- und Y-Achsen der Stufen bewegt werden, und diese Bewegung kann in dieser horizontalen Ebene entlang irgendeiner geraden Linie erfolgen, da diese Bewegungen gleichzeitig durchgeführt werden können.

Das Halbleiterplättchen 12 wird auf der oberen Plattform 20 durch einen Vakuumhalter 22 zur Bewegung mit diesem angesaugt. Der Halter 22 ist unterhalb einer Projektionslinse 26 oder eines anderen Bauteils angeordnet, das bei der Bearbeitung des Halbleiterplättchens verwendet wird. Das Fadenkreuz 14 wird durch einen Vakuumhalter 28 direkt oberhalb der Projektionslinse 26 und längs einer optischen Achse von dieser gehalten. Sowohl die Projektionslinse als auch der Halter 28 für das Fadenkreuz 14 sind auf einem an den Granitblock befestigten Rahmen angeordnet. Bei der Herstellung von integrierten Schaltkreisen oder dgl. aus dem Halbleiterplättchen 12 wird die Stufe 10 längs der X- und Y-Achsen bewegt, um nacheinander angrenzende Bereiche eines Niveaus der Mikroschaltung auszurichten, welche schon auf dem Halbleiterplättchen gebildet sein können, mit einem Abbild eines anderen Niveaus der auf dem Fadenkreuz 14 enthaltenen Mikroschaltung, die noch auf dem Halbleiterplättchen an jedem dieser Bereiche zu drucken ist. Dieses Abbild wird auf das Halbleiterplättchen 12 durch die Projektionslinse 26 geworfen.

Um auf der Station 10 genau orthogonale X- und Y-Bewegungsachsen zu erhalten, sind zwei längsgestreckte Planspiegel 30 und 32 fest auf der oberen Plattform 20 zur Bewegung mit dieser angeordnet. Diese Spiegel, die nachfolgend als die ersten und zweiten bewegbaren Spiegel 30 und 32 bezeichnet werden, sind symmetrisch zur Y-Achse in ersten bzw. zweiten vertikalen Ebenen angeordnet, die sich an der Y-Achse in einem Winkel von 2θ schneiden. Es sind

keine speziellen Meßeinrichtungen oder kritischen Meßverfahren erforderlich, um die ersten und zweiten bewegbaren Spiegel 30 und 32 auf der oberen Plattform 20 der Stufe 10 zu befestigen, da die Stufe in nachfolgend beschriebener Weise derart geregelt wird, daß die X- und die Y-Achsen genau rechtwinklig zueinander angeordnet sind und sich an der Y-Achse im Winkel von $2\theta$ zwischen den ersten und zweiten bewegbaren Spiegeln schneiden. Die ersten und zweiten bewegbaren Spiegel 30 und 32 können daher in ersten bzw. zweiten vertikalen Ebenen angeordnet werden, die sich in einem nahezu beliebigen Winkel schneiden können. Zum Zweck der Erläuterung sind die Spiegel fest auf der oberen Plattform 20 der Stufe 10 in einem nominellen rechten Winkel zueinander mittels eines Trägers 34 angeordnet. Die ersten und zweiten Planspiegel 36 und 38 sind fest auf einem Gehäuse der Projektionslinse 26 über dem Träger 34 angeordnet. Diese Spiegel, die nachfolgend als die ersten und zweiten stationären Spiegel 36 und 38 bezeichnet werden, entsprechen und sind parallel angeordnet zu den ersten und zweiten bewegbaren Spiegeln 30 bzw. 32.

Die ersten und zweiten Interferometersysteme 40 und 42 werden verwendet, um die Geschwindigkeiten der ersten und zweiten bewegbaren Spiegel 30 und 32 bezüglich der ersten und zweiten stationären Spiegel 36 und 38 genau zu messen, während diese längs entsprechender erster (oder $\Delta L1$) und zweiter (oder $\Delta L2$) Meßwege rechtwinklig zu den ersten bzw. zweiten bewegbaren Spiegeln bewegt werden. Dieses erfolgt, wann immer die Stufe 10 längs der X-Achse oder der Y-Achse bewegt wird, wobei Meßsignale über die entsprechenden Geschwindigkeiten abgegeben werden. Derartige Interferometersysteme sind beispielsweise beschrieben in Application Note 197-2 für den Laserumformer 5501 A der Firma Hewlett-Packard Company und in US-PS 3 458 259, und sind als erste und zweite Interferometersysteme 40 und 42 verwendbar. Die Interferometersysteme 40 und 42 verwenden gemeinsam einen Laserumformer 44 mit zwei Frequenzen und einer Schwingungsart zur Aussendung eines Lichtstrahls 46, mit einer ersten Strahlkomponente der Frequenz $f_1$, welche nachfolgend als $f_1$-Licht bezeichnet wird, und einer zweiten parallelen und überlappenden Strahlkomponente mit einer Frequenz $f_2$, welche nachfolgend als $f_2$-Licht bezeichnet wird. Diese parallelen und überlappenden Strahlkomponenten von $f_1$- und $f_2$-Licht haben lineare horizontale bzw. vertikale Polarisationen bezüglich des Laserumformers 44. Eine Strahlablenkeinrichtung 48 lenkt den Strahl des Lichts 46 ab vom Laserumformer 44 nach oben zu einem Strahlteiler 50, der 50% des Lichtstrahls nach oben durch eine Öffnung 52 in einem Rahmen 54 ablenkt, der den Granitblock 18 hält. Der Strahlteiler 50 reflektiert 50% des Lichtstrahls 46 vom Laserumformer 44 zu einer anderen Strahlumlenkeinrichtung 56, von welcher das Licht wiederum nach oben durch eine Öffnung 58 im Rahmen 54 abgelenkt wird.

Der Laserumformer 44, die Strahlablenkeinrichtungen 48 und 56, der Strahlteiler 50 und die verschiedenen Elemente der ersten und zweiten Interferometersysteme 40 und 42 können alle auf einem Rahmen befestigt sein, der an dem Granitblock 18 in der dargestellten Anordnung befestigt ist. Die ersten und zweiten bewegbaren Spiegel 30 und 32 sind auf dem Träger 34 unter einem Winkel von nominell 45° bezüglich der Y-Achse angeordnet, und die Meßwege $\Delta L_1$ und $\Delta L_2$ der ersten bzw. zweiten Interferometersysteme 40 und 42 werden nominell um 45° bezüglich der Y-Achse gedreht. Da der Laserumformer 44 in der dargestellten Weise längs der X-Achse befestigt ist, muß der Laserumformer auch nominell um 45° bezüglich der Y-Achse gedreht werden, um die Polarisationsebenen des $f_1$-Lichts und des $f_2$-Lichts unter 45° bezüglich der Y-Achse und somit parallel und rechtwinklig zu den ersten und zweiten Interferometersystemen 40 und 42 auszurichten. Dieses ist wichtig, da das maximale Ausgangssignal von den ersten und zweiten Interferometersystemen 40 und 42 erhalten wird, wenn diese Polarisationsebenen in der beschriebenen Weise ausgerichtet sind, während im wesentlichen kein Ausgangssignal erhalten werden kann von den ersten und zweiten Interferometersystemen, wenn diese Polarisationsebenen unter einem Winkel von 45° bezüglich jedes der ersten und zweiten Interferometersysteme ausgerichtet sind.

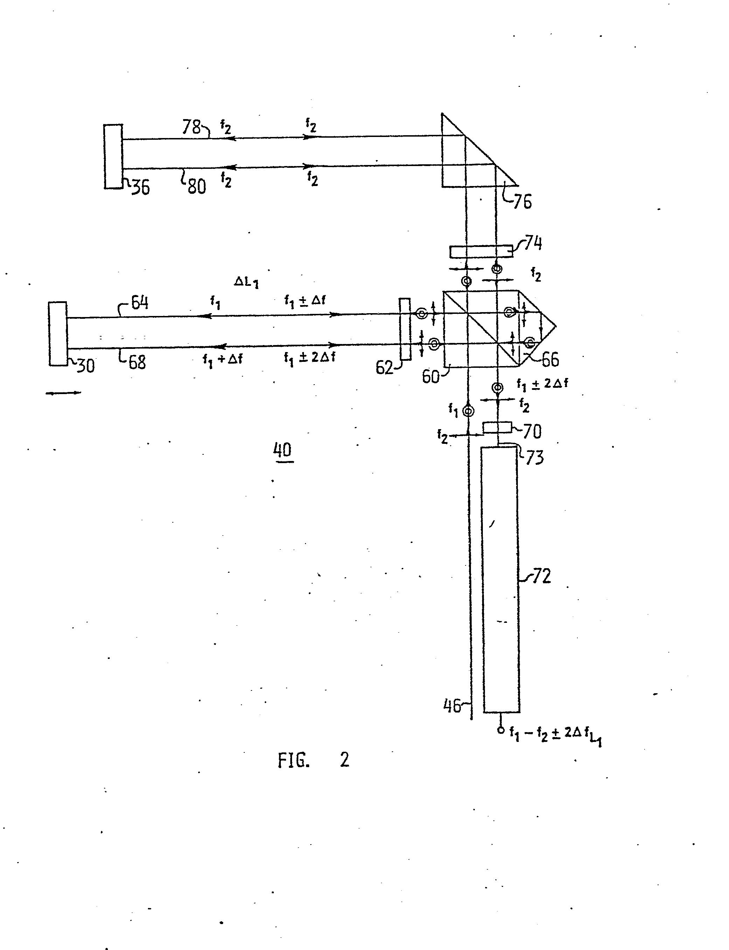

Da die ersten und zweiten Interferometersysteme 40 und 42 identisch sind, werden die gleichen Bezugszeichen allgemein für die gleichen Elemente beider Interferometersysteme verwendet, wobei die Bezugszeichen für das zweite Interferometersystem mit einem Strich versehen sind, und es wird nur das erste Interferometersystem 40 im einzelnen erläutert. Wie auch aus Figur 2 ersichtlich ist, enthält das erste Interferometersystem 50 einen polarisierenden Strahlteiler 60, um $f_1$-Licht der linearen horizontalen Polarisationsebene, welches durch einen doppelten Pfeil rechtwinklig zur Papierebene dargestellt ist, zu reflektieren, welches durch die Öffnung 52 des Rahmens 54 gelangt, und um das $f_2$-Licht der linearen vertikalen Polarisationsebene, welches durch einen doppelten Pfeil in der Papierebene dargestellt ist, hindurch zu lassen, welches durch die Öffnung 52 gelangt, wobei ein Hilfspfeil in der Papierebene bei jedem Doppelpfeil angebracht ist, um die Richtung der Lichtausbreitung anzuzeigen. Das durch den polarisierenden Strahlteiler 60 reflektierte $f_1$-Licht gelangt durch eine Viertelwellenplatte 62 zum ersten bewegbaren Spiegel 30 längs eines ersten Abschnitts 64 des Meßwegs $\Delta L_1$, welcher rechtwinklig zum ersten bewegbaren Spiegel verläuft. Da die obere Plattform 20 der Stufe 10 entweder längs der X-Achse oder längs der Y-Achse bewegt wird, bewirkt die entsprechende Bewegung des ersten bewegbaren Spiegels 30 bezüglich des ersten stationären Spiegels 36 längs des Meßwegs $\Delta L_1$, daß das $f_1$-Licht die Frequenz um $\pm \Delta f$ ändert, wenn es von dem ersten bewegbaren Spiegel zurück längs des ersten Abschnitts 64 des Meßwegs $\Delta L_1$ durch die Viertelwellenplatte 62 reflektiert wird. Die Viertelwellenplatte 62 ändert die Polarisation des in Vorwärtsrichtung hindurchgelangenden $f_1$-Lichts in Licht mit rechtsdrehender Kreispolarisation, welches wiederum in Licht mit linksdrehender Kreispolarisation umgeformt wird, wenn das $f_1$-Licht von dem ersten bewegbaren Spiegel 30 reflektiert wird. Außerdem wird die Polarisation des $f_1 \pm \Delta f$-Lichts, welches in rückwärtiger Richtung reflektiert, in linear-vertikal polarisiertes Licht umgeformt. Somit wird das Licht mit der Frequenz $f_1 \pm \Delta f$ durch den polarisierenden Strahlteiler 60 zu einem damit verbunden Umkehrreflektor 66 übertragen, von dem das Licht in Vorwärtsrichtung durch den polarisierenden Strahlteiler und die Viertelwellenplatte 62 zu dem ersten bewegbaren Spiegel 30 längs eines zweiten Abschnitts 68 des $\Delta L_1$-Meßwegs reflektiert wird. Das Licht mit der Wellenlänge $f_1 \pm \Delta f$, welches von dem ersten bewegbaren Spiegel 30 zurück längs des zweiten Abschnitts 68 des $\Delta L_1$-Meßwegs reflek-tiert wird, ändert die Frequenz um $\pm \Delta f$, wenn die obere Plattform 20 der Stufe 10 entweder längs der X-Achse oder der Y-Achse bewegt wird. In diesem Fall ändert die Viertelwellenplatte 62 die Polarisation des Lichts mit der Wellenlänge $f_1 \pm \Delta f$, welches in Vorwärtsrichtung hindurchgelangt, in linksdrehend zirkularpolarisiertes Licht, welches wiederum in rechtsdrehend zirkularpolarisiertes Licht umgeformt wird, wenn das Licht mit der Fre-quenz $f_1 \pm \Delta f$ von dem ersten bewegbaren Spiegel 30 reflektiert wird, und die Polarisation des Lichts mit der Frequenz $f_1 \pm 2 \Delta f$, welches in Rückwärtsrichtung hindurchreflektiert wurde, wird in linear horizontal polarisiertes Licht umgeformt. Das Licht mit der Frequenz $f_1 \pm 2 \Delta f$, welches in rückwärtiger Richtung längs des zweiten Abschnitts 68 des Meßwegs $\Delta L_1$ reflektiert wurde, wird da-her durch den polarisierenden Strahlteiler 60 nach unten durch einen Mischpolarisator 70 auf einen photoelektrischen Detektor 72 reflektiert.

In ähnlicher Weise gelangt das durch den polarisierenden Strahlteiler 60 übertragene Licht mit der Frequenz $f_2$ vorwärts durch eine Viertelwellenplatte 74 zu einer Strahlablenkeinrichtung 76, von welcher das Licht zu dem ersten stationären Spiegel 36 längs eines Abschnitts 78 eines Referenzwegs $\Delta L_1$ reflektiert wird, der in der beschriebenen Weise rechtwinklig zu dem ersten stationären Spiegel (wenigstens von der Strahlbeugeeinrichtung 76 aus gesehen vorwärts) verläuft. Dieses Licht mit der Frequenz $f_2$ wird von dem ersten stationären Spiegel 36 zurück längs des ersten Abschnitts 78 des Referenzwegs $\Delta L_1$ zu der Strahlablenkeinrichtung 76 und dann durch die Viertelwellenplatte 74 hindurch reflektiert. Die Viertelwellenplatte 74 ändert die Polarisation des Lichts mit der Frequenz $f_2$, welches in Vorwärtsrichtung durch diese längs des ersten Abschnitts 78 des Referenzwegs $\Delta L_1$ gelangt, in Licht mit linksdrehender Polarisation, wie es wiederum in rechtsdrehend polarisiertes Licht umgeformt wird, wenn das Licht mit der Frequenz $f_2$ von dem ersten stationären Spiegel 36 reflektiert wird, und die Polarisation des Lichts mit der Frequenz $f_2$, welches in rückwärtiger Richtung längs des ersten Abschnitts 78 des Referenzwegs $\Delta L_1$ reflektiert wurde, wird in linear horizontal polarisiertes Licht umgeformt. Somit wird das Licht mit der Frequenz $f_2$, welches von dem ersten stationären Spiegel 36 längs des ersten Abschnitts 78 des Referenzwegs $\Delta L_1$ reflektiert wird, durch den polarisierenden Strahlteiler 60 zu dem Umkehrreflektor 66 reflektiert, von dem aus das Licht auf den polarisierenden Strahlteiler zurückgeworfen wird, wo es durch die Viertelwellenplatte 74 hindurch reflektiert und durch die Strahlablenkeinrichtung 76 auf den ersten stationären Spiegel längs eines zweiten Abschnitts 80 des $\Delta L_1$ Referenzwegs geworfen wird. Dieses Licht mit der Frequenz $f_2$ wird wiederum von dem ersten stationären Spiegel 36 zurück längs des zweiten Abschnitts 80 des $\Delta L_1$ Referenzwegs zu der Strahlablenkeinrichtung 76 und dann durch die Viertelwellenplatte 74 hindurch reflektiert. Die Viertelwellenplatte 74 formt die Polarisation des Lichts mit der Frequenz $f_2$, welches durch diese in Vorwärtsrichtung längs des zweiten Abschnitts 80 des $\Delta L_1$ Referenzwegs hindurchgelangt,

in rechtsdrehend polarisiertes Licht um, welches wiederum in linksdrehend polarisiertes Licht umgeformt wird, wenn das Licht mit der Frequenz $f_2$ wieder von dem ersten stationären Spiegel 36 reflektiert wird, und die Polarisation des Lichts mit der Frequenz $f_2$, welches in rückwärtiger Richtung längs des zweiten Abschnitts 80 des $\Delta L_1$ Referenzwegs reflektiert wird, wird in linear vertikal polarisiertes Licht umgeformt. Das Licht mit der Frequenz $f_2$, welches in rückwärtiger Richtung längs des zweiten Abschnitts 80 des $\Delta L_1$ Referenzwegs reflektiert wird, wird daher durch den polarisierenden Strahlteiler 60 nach unten durch den Mischpolarisator 70 hindurch zum photoelektrischen Detektor 72 übertragen mit dem parallelen und überlappenden Licht mit der Frequenz $f_1 \pm 2 \, \Delta f$ von dem zweiten Abschnitt 68 des $\Delta L_1$ Meßwegs in einem Ausgangslichtstrahl 73. Zur Vereinfachung der Darstellung wurden die Strahlengänge des Eingangslichtstrahls 46, welcher in den polarisierenden Strahlteiler 60 eintritt und des Ausgangslichtstrahls 73, welcher in den photoelektrischen Detektor 72 eintritt, die ersten und zweiten Abschnitte 64 und 68 des $\Delta L_1$ Meßwegs, die ersten und zweiten Abschnitte 78 und 80 des $\Delta L_1$ Referenzwegs und der Umkehrreflektor 66 dargestellt als räumlich in der Papierebene der Figur 2 angeordnet, wogegen diese Baueinheiten und Strahlengängen tatsächlich räumlich in einer Ebene rechtwinklig zur Papierebene angeordnet sind, wie sich aus der perspektivischen Ansicht gemäß Figur 1 ergibt.

Der mischende Polarisator 70 mischt das Licht mit der Frequenz $f_1 \pm 2 \, \Delta f$ und das parallele und überlappende Licht mit der Frequenz $f_2$ des Ausgangslichtstrahls 73, so daß jeder dieser Strahlanteile des Ausgangslichtstrahls, der in den photoelektrischen Detektor eintritt, einen Anteil mit ähnlicher Polarisation hat. Diese ähnlich polarisierten Anteile werden durch den photoelektrischen Detektor 72 gemischt, um ein erstes elektrisches Meßsignal mit einer Frequenz $f_1 - f_2 \pm 2 \, \Delta f_{L_1}$ am Ausgang des photoelektrischen Detektors zu erhalten. Ein zweites elektrisches Meßsignal mit einer Frequenz $f_1-f_2\pm\Delta f_{L_2}$ wird in der gleichen Weise wie vorher beschrieben durch das zweite Interferometersystem 42 am Ausgang des photoelektrischen Detektors 72' dieses Systems erzeugt.

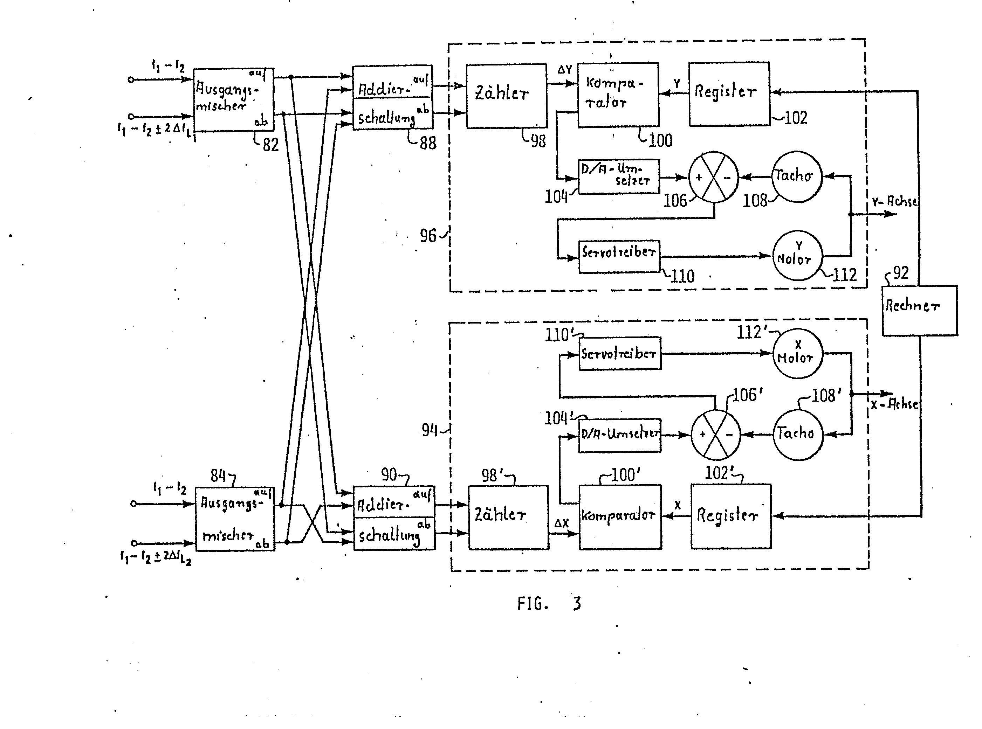

Entsprechend Figur 3 wird das erste elektrische Meßsignal mit der Frequenz $f_1-f_2\Delta f_{L_1}$ dem ersten Eingang eines ersten digitalen Ausgangsmischers 82 des ersten Interferometersystems 40 zugeführt, und das zweite elektrische Meßsignal mit der Frequenz $f_1-f_2\pm 2\Delta f_{L_2}$ wird einem ersten Eingang eines zweiten dualen Ausgangsmischers 84 des zweiten Interferometersystems 42 zugeführt. Ein elektrisches Referenzsignal mit der Frequenz $f_1-f_2$, welches durch den Laserumformer 44 an einem elektrischen Ausgang 86 erzeugt wird (siehe Figur 1), wird einem zweiten Eingang des zweiten Ausgangsmischers 82 und einem zweiten Eingang des zweiten Ausgangsmischers 84 zugeführt. Der erste Ausgangsmischer 82 verknüpft das erste Meßsignal und das Referenzsignal, um ein aus einem ersten Impulszug bestehendes Meßsignal mit einer Wiederholungsgeschwindigkeit von $2\Delta f_{L_1}$ an einem inkrementierenden oder einem dekrementierenden Ausgang zu erzeugen, je nachdem ob das Vorzeichen der $\pm 2\Delta f_{L_1}$ Komponente der Frequenz des ersten Meßsignales positiv bzw. negativ ist. Die Wiederholungsgeschwindigkeit des ersten Impulssignalzugs ist proportional der Geschwindigkeit des ersten bewegbaren Spiegels 30, während dieser bezüglich des ersten stationären Spiegels 36 längs des $\Delta L_1$ Meßweges des ersten Interferometersystems 40 bewegt wird, was geschieht, wenn die obere Plattform 20 der Stufe 10 entweder entlang der X- oder der Y-Bewegungsachse der Stufe bewegt wird. In ähnlicher Weise verknüpft der zweite Ausgangsmischer 84 das zweite Meßsignal und das Referenzsignal und erzeugt ein aus einem zweiten Impulszug bestehendes Meßsignal mit einer Wiederholungsgeschwindigkeit von $2\Delta f_{L_2}$ an einem inkrementierenden oder dekrementierenden Ausgang je nachdem, ob das Vorzeichen des $\pm 2\Delta f_{L_2}$ Anteils der Frequenz des zweiten Meßsignals positiv oder negativ ist. Die Wiederholungsgeschwindigkeit des zweiten Impulszugs ist proportional der Geschwindigkeit des zweiten bewegbaren Spiegels 32, während dieser bezüglich des zweiten stationären Spiegels 38 längs des $\Delta L_2$ Meßwegs des zweiten Interferometersystems 42 bewegt wird. Dieses ist ebenfalls der Fall, wenn die obere Plattform 20 der Stufe 10 entweder längs der X- oder der Y-Bewegungsachse der Stufe bewegt wird.

Die Impulse der ersten und zweiten aus Impulszügen bestehenden Signale, welcher an den inkrementierenden Ausgängen der ersten und zweiten Ausgangsmischer 82 und 84 auftreten, werden einem ersten Paar von Eingängen einer ersten dualen Addierschaltung 88 zugeführt, welche einen Impulszug erzeugt, welcher der Summe dieser Impulse an einem inkrementierenden Ausgang der ersten dualen Addierschaltung entspricht. In ähnlicher Weise werden die Impulse der ersten und zweiten Impulszüge der Signale an den dekrementierenden Ausgängen der ersten und zweiten Ausgangsmischer 82 und 84 einem zweiten Paar von Eingängen der ersten dualen Addierschaltung 88 zugeführt, welche einen Impulszug erzeugt, welcher der Summe dieser Impulse am dekrementierenden Ausgang der ersten dualen Addierschaltung entspricht. Die dadurch an den inkrementierenden und dekrementierenden Ausgängen der ersten Addierschaltung 88 erzeugten Impulszüge stellen die Summe der ersten und zweiten aus Impulszügen bestehenden Signale dar. Die Impulse des ersten Signales am inkrementierenden Ausgang des ersten Ausgangsmischers 82 und die Impulse des zweiten Signales am dekrementierenden Ausgang des zweiten Ausgangsmischers 84 werden einem ersten Paar von Eingängen einer zweiten dualen Addierschaltung 90 zugeführt, welche die Summe dieser Impulse an einem inkrementierenden Ausgang der zweiten Addierschaltung erzeugt. In ähnlicher Weise werden die Impulse des ersten aus einem Impulszug bestehenden Signals, die am dekrementierenden Ausgang des ersten Ausgangsmischers 82 auftreten, und die Impulse des zweiten aus einem Impulszug bestehenden Signals, welche am inkrementierenden Ausgang des zweiten Ausgangsmischers 84 auftreten, einem zweiten Paar von Eingängen der zweiten Addierschaltung 90 zugeführt. Die Summen der dadurch erzeugten Impulse an den inkrementierenden und dekrementierenden Ausgängen der zweiten Addierschaltung 90 stellen die Differenz der ersten und zweiten impulsförmigen Signale dar. Entsprechend der Differenz und der Summe der ersten und zweiten aus Impulszügen bestehenden Signale und der digitalen Signale über die X- und Y-Endpunkte, welche beispielsweise von einem Rechner 92 aufgenommen werden, bewegen die Regelungsschaltungen 94 und 96 für die Positionierung entlang den X- und Y-Achsen die obere Plattform 20 der Stufe 10 längs genau rechtwinklig zueinander befindlicher X- und Y-Achsen, wobei die Y-Achse den Winkel 2 θ zwischen den ersten und zweiten beweglichen Spiegeln 30 und 32 schneidet, so daß die obere Plattform 20 genau ausgerichtet wird, wie durch die digitalen Datensignale über die X- und Y-Endpunkte spezifiert wird. Diese Bewegungen der oberen Plattform 20 längs genau rechtwinkliger X- und Y-Achsen wird durch die Regelungsschaltungen 94 und 96 entsprechend den folgenden, später erklärten Gleichungen ausgeführt:

$$(1) \quad \Delta X = K_x( \Delta L_1 - \Delta L_2), \text{ wobei } K_x = 1/2 \cos\theta; \text{ und}$$

$$(2) \quad \Delta Y = K_y( \Delta L_1 - \Delta L_2), \text{ wobei } K_y = 1/2 \sin\theta.$$

Die Rechtwinkligkeit der Bewegungen um $\Delta X$ und $\Delta Y$ der oberen Plattform 20 längs X- und der Y-Bewegungsachsen der Stufe 10 entsprechend den Gleichungen (1) und (2) ist durch die Tatsache zu begründen, daß $\Delta X$ eine Funktion von $\cos\theta$ und $\Delta Y$ eine Funktion von $\sin\theta$ ist, und daß diese cos- und sin-Winkel immer komplementären Winkeln entsprechen.

Da die Regelschaltkreise 94 und 96 für die Positionierung entlang den X- und Y-Achsen identisch sind, werden die gleichen Bezugszeichen für die gleichen Elemente beider Schaltkreise verwendet, wobei für die Schaltkreise zur Positionierung längs der X-Achse mit einem Strich markiert werden, und es wird im einzelnen nur der Schaltkreis für die Positionierung entlang der Y-Achse erläutert. Die an den inkrementierenden und dekrementierenden Ausgängen der ersten Addierschaltung 88 auftretenden Impulse werden einem reversiblen Zähler 98 zugeführt, der diese Impulse zählt, um ein digitales Ausgangssignal $\Delta Y$ zu erzeugen, welches proportional der

Summe $(\Delta L_1 + \Delta L_2)$ der Verschiebungen $\Delta L_1$ und $\Delta L_2$ der ersten und zweiten bewegbaren Spiegel 30 und 32 bezüglich der ersten und zweiten stationären Spiegel 36 und 38 längs der $\Delta L_1$- und $\Delta L_2$-Meßwege der ersten und zweiten Interferometersysteme 40 bzw. 42 ist, wenn die obere Plattform 20 der Stufe 10 entweder längs der X-Achse oder der Y-Achse der Stufe bewegt wird. Der Zähler 98 integriert die Summe der Geschwindigkeiten der ersten und zweiten bewegbaren Spiegel 30 und 32 über der Zeit, wenn diese Geschwindigkeiten durch die ersten bzw. zweiten Interferometersysteme 40 bzw. 42 gemessen werden, um das digitale Ausgangssignal $\Delta Y$ zu erzeugen. Dieses Ausgangssignal $\Delta Y$ wird einem Eingang eines Komparators 100 zugeführt, und das digitale Datensignal über den Y-Endpunkt vom Rechner 92 wird in einem Register 102 gespeichert und dem anderen Eingang des Komparators zugeführt. Der Komparator 100 erzeugt ein digitales Vergleichssignal, welches der Differenz zwischen den zugeführten digitalen Signalen entspricht und der Strecke proportional ist, und welche die obere Plattform 20 längs der Y-Achse bewegt werden muß, um die Position der Y-Achse zu erreichen, die durch das digitale Datensignal über den Y-Endpunkt spezifiziert ist. Dieses digitale Vergleichssignal wird einem D/A-Umsetzer 104 zugeführt, der es in ein analoges Spannungssignal umformt und einem Eingang einer Summierschaltung 106 zuführt. Ein anderes analoges Spannungssignal wird durch einen Tachometer 108 in nachfolgend beschriebener Weise erzeugt und dem anderen Eingang der Summierschaltung 106 zugeführt. Somit erzeugt die Summierschaltung 106 ein Ausgangsspannungssignal, welches der Differenz zwischen dem analogen Spannungssignal vom A/D-Umsetzer 104 und dem Tachometer 108 entspricht. Dieses Ausgangsspannungssignal wird einem Servoschaltkreis 110 zugeführt, der dementsprechend einen Servomotor 112 für die Y-Achse speist, der auf der oberen Plattform 20 angeordnet ist und gegenüber der unteren Plattform 16 reagiert, um die obere Plattform längs der Y-Achse in die Position der Y-Achse zu bringen, welche durch das digitale Datensignal über den Y-Endpunkt spezifiziert ist. Der Tachometer 108 ist mit dem Servomotor 112 funktionell verbunden und erzeugt ein analoges Spannungssignal, welches proportional der Geschwindigkeit des Motors für die Y-Achse ist und führt dieses der Summierschaltung 106 zu. Dadurch wird das Ausgangsspannungssignal von der Summierschaltung 106 vermindert und der Servomotor 112 für die Y-Achse läuft langsamer, wenn die obere Plattform 20 sich der Position auf der Y-Achse nähert, die durch das digitale Datensignal über den Y-Endpunkt spezifiziert ist, so daß die obere Plattform nicht über die spezifizierte Position auf der Y-Achse hinaus verschoben wird.

Der reversible Zähler 98' der Regelungsschaltung 94 für die X-Achsenposition integriert in entsprechender Weise die Differenz der Geschwindigkeiten der ersten und zweiten bewegbaren Spiegel 30 und 32, wenn diese Geschwindigkeiten durch die ersten und zweiten Interferometersysteme 40 bzw. 42 gemessen werden, um ein digitales Ausgangssignal $\Delta X$ zu erzeugen, welches proportional der Differenz $(\Delta L_1 - \Delta L_2)$ der Verschie-bungen $\Delta L_1$ und $\Delta L_2$ der ersten und zweiten bewegbaren Spiegel bezüglich der ersten und zweiten stationären Spiegel 36 und 38 längs der Meßwege $\Delta L_1$ und $\Delta L_2$ der ersten bzw. zweiten Interferometersysteme ist, während die obere Plattform 20 der Stufe 10 entweder entlang der X-Achse oder der Y-Achse der Stufe bewegt wird. Entsprechend diesem digitalen Aus-gangssignal $\Delta X$ und einem digitalen Datensignal über den X-Wert, das in dem Register 102' durch den Rechner 92 gespeichert ist, speist die Servotreiberschaltung 110' den Servomotor 112' für die X-Achse, welcher auf der unteren Plattform 16 der Stufe 10 befestigt ist und gegenüber dem Granitblock 18 arbeitet und die untere Plattform 16 und damit die obere Plattform 20 in die X-Achsenposition bringt, welche durch das digitale Datensignal über den X-Endpunkt spezifiziert ist. Somit wird die obere Plattform 20 entlang genau rechtwinkliger X- und Y-Achsen entsprechend der Differenz $(\Delta L_1 - \Delta L_2)$

und der Summe ($\Delta L_1 + \Delta L_2$) der Verschiebungen der ersten und zweiten bewegbaren Spiegel 30 und 32 bezüglich der ersten und zweiten stationären Spiegel 36 und 38 längs der Meßwege $\Delta L_1$ und $\Delta L_2$ der ersten bzw. zweiten Interferometersysteme 40 bzw. 42 bewegt, die durch die entsprechenden Ausdrücke in den Gleichungen (1) und (2) spezifiziert sind. In der Praxis können die Konstanten $K_x$ und $K_y$ dieser Gleichungen bestimmt werden, ohne daß der halbe Winkel $\theta$ zwischen den ersten und zweiten bewegbaren Spiegeln 30 und 32 bekannt ist oder gemessen wird. Diese Konstanten können bestimmt werden, indem einfach ein Referenzkontaktglied an der oberen Plattform 20 angeordnet wird, ein Meßklotz mit beispielsweise 10 cm Länge auf der oberen Plattform längs der Y-Achse und an dem Referenzkontaktglied anliegend angeordnet wird, ein Auslenkungs-Meßfühler eines elektronischen Meßgeräts in einer festen Position bezüglich der oberen Plattform längs der Y-Achse und in dem Weg des Meßklotzes und des Referenzkontaktgliedes angebracht wird, die Positionierungsstufe entlang der Y-Achse weiterbewegt wird, um den Meßklotz gegen den Meßfühler zu drücken, bis das elektronische Meßgerät auf Null gestellt wird, und dann auch der reversible Zähler 98 des Meßfühlers 96 für die Y-Achsenposition auf Null gestellt wird, die obere Plattform längs der Y-Achse zurückbewegt und der Meßklotz entfernt wird, die obere Plattform vorwärts zur Y-Achse zur Anlage des Referenzkontaktgliedes gegen den Meßfühler gebracht wird, bis das elektronische Meßgerät wieder auf Null gestellt ist, die Länge des Meßklotzes durch den auf diesem registrierten Zählerstand des Zählers 98 geteilt wird und $K_y$ in Zoll pro Zählerstand bestimmt wird und das gleiche Verfahren für die X-Achse mit dem gleichen Referenzkontaktglied, dem gleichen Meßklotz und reversiblen Zähler 98' der Regelungsschaltung 34 für die X-Achsenpositionierung zur Bestimmung von $K_x$ in Zoll pro Zählerstand wiederholt wird. Da Meßklötze gewöhnlich durch das Eichbüro mit Submikrongenauigkeit geeicht werden, erlaubt dieses Kalibrierverfahren, daß die obere Plattform 20 der Positionierungsstufe 10 längs der rechtwinkligen X- und Y-Achsen mit extrem hoher Präzision bewegt wird. Die Konstanten $K_x$ und $K_y$, sowie andere möglicherweise zur Kompensation von atmosphärischen Änderungen verwendeten Konstanten, sind in dem Rechner 92 gespeichert und werden zur Bestimmung eines Satzes von Paaren von Datensignalen über die X- und Y-Endpunkte bestimmt, die für den gewünschten Schritt- und Wiederholungsvorgang erforderlich sind. Wenn jedes Paar von Datensignalen über die X- und Y-Endpunkte durch den Rechner 92 den Registern 102' und 102 der Regelungsschaltung 94 und 96 über die X- und Y-Achsenpositionierung zugeführt wird, wird die obere Plattform 20 der Positionierungsstufe 10 nacheinander schrittweise längs genau rechtwinkliger X- und Y-Achsen in die durch das Paar von X- und Y-Endpunktdatensignalen spezifizierte Position bewegt, so daß nacheinander aneinander angrenzende Bereiche der Mikroschaltung eines Niveaus auf dem Halbleiterplättchen 12 mit dem projizierten Abbild des Fadenkreuzes oder Rahmens 14 ausgerichtet werden. Da die obere Plattform 20 entlang genau rechtwinkliger X- und Y-Achsen schrittweise weitergeschaltet wird, können andere derartige Positionierungsstufen austauschbar beim Drucken der verschiedenen Niveaus der Mikroschaltung auf demselben Halbleiterplättchen 12 verwendet werden.

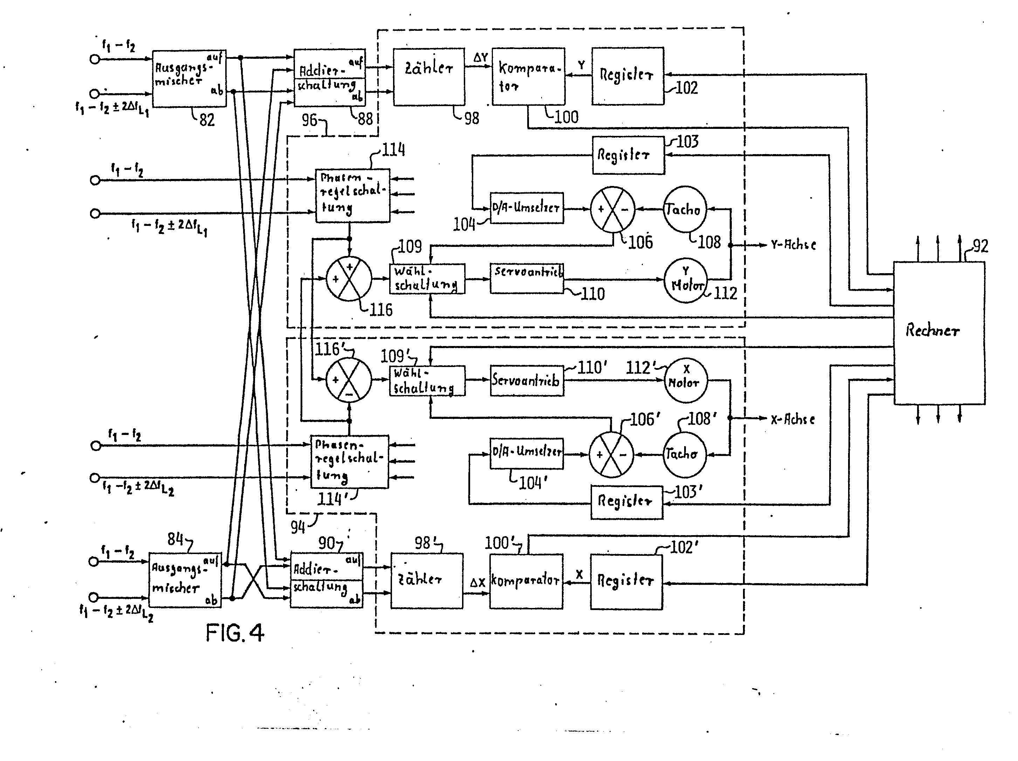

Entsprechend Figur 4 wird ein anderes Paar von Positionierungsregelkreisen 96 und 94 für die X- und Y-Achsen erläutert, das anstelle der bisher in Verbindung mit Figur 3 verwendeten Positionierungsschaltung benutzt werden kann zur Regelung der Position der interferometrisch geregelten Positionierungsstufe gemäß Figur 1. Da diese Regelschaltkreise 96 und 94 für die Positionierung entlang der X- und der Y-Achse identisch sind, werden wiederum die gleichen Bezugszeichen für die gleichen Elemente beider Schaltkreise verwendet, wobei die Elemente des Regelschaltkreises für die X-Positionierung mit einem Strich versehen werden, und es wird im einzelnen nur der Regelschaltkreis 96 beschrieben. Die Impulse an den inkrementierenden und dekrementierenden Ausgängen der ersten dualen Addierschaltung 88 werden wieder einem reversiblen Zähler 98 zugeführt, der diese Impulse zählt und ein digitales Ausgangssignal $\Delta Y$ herstellt, welches proportional der Summe $(\Delta L_1 + \Delta L_2)$ der Verschiebungen $\Delta L_1$ und $\Delta L_2$ der ersten und zweiten bewegbaren Spiegel 30 und 32 bezüglich der ersten und zweiten stationären Spiegel 36 und 38 längs der $\Delta L_1$- und $\Delta L_2$-Meßwege der ersten bzw. zweiten Interferometersysteme 40 bzw. 42 ist, wenn die obere Plattform 20 der Stufe 10 entlang der X-Achse oder der Y-Achse bewegt wird. Der reversible Zähler 98 integriert wieder die Summe der Geschwindigkeiten der ersten und zweiten bewegbaren Spiegel 30 und 32 über der Zeit, wenn diese Geschwindigkeiten durch die ersten bzw. zweiten Interferometersysteme 40 bzw. 42 gemessen werden, um das digitale Ausgangssignal $\Delta Y$ abzuleiten. Dieses Ausgangssignal $\Delta Y$ wird wieder einem Eingang eines Komparators 100 zugeführt, und das digitale Datensignal über den Y-Wert vom Rechner 92 wird wieder in einem Register 102 gespeichert und dem anderen Eingang des Komparators zugeführt. Der Komparator 100 erzeugt ein digitales Vergleichssignal, welches der Differenz zwischen den ihm zugeführten digitalen Signalen entspricht und proportional der Strecke ist, um welche die obere Plattform 20 der Stufe 10 längs der Y-Achse bewegt werden muß, um die Position auf der Y-Achse zu erreichen, die durch das Y-Datensignal spezifiziert ist. Dieses digitale Vergleichssignal wird dem Rechner 92 zugeführt, der wieder bei einem von Null abweichenden Eingangssignal nacheinander jedes von einer Reihe von digitalen Geschwindigkeitssignalen in einem Register 103 speichert. Diese digitalen Geschwindigkeitssignale und die Dauer, während derer sie in dem Register 103 gespeichert sind, definieren ein optimales Profil der Beschleunigung, der Maximalgeschwindigkeit und der Bremsgeschwindigkeiten, wie es in bekannter Weise festgelegt werden kann, für die Strecke, um welche die obere Plattform 20 der Positionierungsstufe 10 längs der Y-Achse bewegt werden muß. Jedes in dem Register 103 gespeicherte digitale Geschwindigkeitssignal wird einem D/A-Umsetzer 104 zugeführt, der dieses in ein analoges Spannungssignal umformt und einem Eingang einer Summierschaltung 106 zuführt. Ein anderes analoges Spannungssignal wird durch einen Tachometer 108 in der vorbeschriebenen Weise erzeugt und dem anderen Eingang der Summierschaltung 106 zugeführt. Somit erzeugt die Summierschaltung 106 eine Ausgangsspannung, die der Differenz zwischen dem analogen Spannungssignal vom A/D-Umsetzer 104 und vom Tachometer 108 entspricht. Bei einem von Null abweichenden Vergleichssignal vom Komparator 100 betätigt der Rechner 92 auch eine Wählschaltung 109 und führt das Ausgangsspannungssignal von der Summierschaltung 106 einer Servotreiberschaltung 110 zu, welche einen Servomotor 112 für die Y-Achse treibt. Dieser Servomotor ist auf der oberen Plattform 20 befestigt und arbeitet gegen die untere Plattform 16 der Positionierungsstufe 10 und bewegt die obere Plattform dadurch längs der Y-Achse zu der Position auf der Y-Achse, welche durch das Datensignal über den Y-Wert bestimmt ist. Der Tachometer 108 ist funktionell mit dem Servomotor 112 für die Y-Achse verbunden und erzeugt ein analoges Spannungssignal, welches proportional dem IST-Wert der Geschwindigkeit des Servomotors für die Y-Achse ist, und führt dieses der Summierschaltung 106 zu. Dadurch wird das Ausgangsspannungssignal von der Summierschaltung 106 verringert und dadurch die tatsächliche Geschwindigkeit und die gewünschte Geschwindigkeit des Servomotors 112 für die Y-Achse gleichgemacht.

Der reversible Zähler 98' der Regelschaltung 94 zur Positionierung entlang der X-Achse integriert in ähnlicher Weise die Differenz der Geschwindigkeiten der ersten und zweiten bewegbaren Spiegel 30 und 32, wenn diese Geschwindigkeiten durch die ersten bzw. zweiten Interferometersysteme 40 bzw. 42 gemessen werden, um ein digitales Ausgangssignal $\Delta X$ zu erzeugen, welches proportional der Differenz $(\Delta L_1 - \Delta L_2)$ der Verschiebungen $\Delta L_1$ und $\Delta L_2$ der ersten und zweiten bewegbaren Spiegel bezüglich der ersten und zweiten stationären Spiegel 36 und 38 längs der $\Delta L_1$- und der $\Delta L_2$-Meßwege der ersten bzw. zweiten Interferometersysteme ist, während die obere Plattform 20 der Positionierungsstufe 10 entlang entweder der X-Achse oder der Y-Achse der Positionierungsstufe bewegt wird. Entsprechend diesem digitalen Ausgangssignal $\Delta X$ und einem Datensignal über den X-Wert, welches in dem Register 102' durch den Rechner 92 gespeichert ist, speist die Servotreiberschaltung 110' den Servomotor 112' für die X-Achsenpositionierung. Dieser Motor ist auf der unteren Plattform 16 der Positionierungsstufe befestigt und arbeitet gegen den Granitblock 18, auf dem die oberen und unteren Plattformen 20 und 16 befestigt sind, so daß die untere Plattform und damit auch die obere Plattform, welche mit der unteren Plattform verbunden ist zur Bewegung mit dieser entlang der X-Achse in die Position auf der X-Achse bewegt werden, die durch das Datensignal über den X-Wert bestimmt ist.

Somit wird die obere Plattform 20 wieder entlang der rechtwinkligen X- und Y-Achsen entsprechend der Differenz $(\Delta L_1 - \Delta L_2)$ und der Summe $(\Delta L_1 + \Delta L_2)$ der Verschiebungen der ersten und zweiten bewegbaren Spiegel 30 und 32 bezüglich der ersten und zweiten stationären Spiegel 36 und 38 entlang der Meßwege $\Delta L_1$ und $\Delta L_2$ der ersten bzw. zweiten Interferometersysteme 40 bzw. 42 bewegt entsprechend den Ausdrücken in den Gleichungen (1) und (2). In der Praxis können die Konstanten $K_x$ und $K_y$ dieser Gleichungen bestimmt werden, ohne daß genau der halbe Winkel $\theta$ zwischen den ersten und zweiten bewegbaren Spiegeln 30 und 32 bekannt sein muß. Die Konstanten $K_x$ und $K_y$ sind zusammen mit anderen Konstanten, welche zur Kompensation von Änderungen der atmosphärischen Bedingungen und dergleichen verwendet werden können, in dem Rechner 92 gespeichert und werden zur Bestimmung eines Satzes von Paaren von Datensignalen über die X- und Y-Werte nacheinander durch den Rechner 92 den Registern 102' und 102 der Regelschaltkreise 94 und 96 für die Positionierung entlang den X- und den Y-Achsen zugeführt, wie vorher beschrieben wurde, um nacheinander die obere Plattform 20 der Positionierungsstufe 10 längs der zu einander rechtwinkligen X- und Y-Achsen in die Positionen zu bewegen, die durch die Paare von Datensignalen über die X/Y-Endpunkte bestimmt sind.

Das Auflösungsvermögen der Regelschaltkreise 94 und 96 für die Positionierung entlang den X- und Y-Achsen gemäß Figur 4 wird entsprechend der bevorzugten Ausführungsform dieser Erfindung erweitert, indem die Regelschaltung 96 für die Positionierung entlang der Y-Achse mit einer Phasenregelschaltung 114 versehen wird, die auf das Referenzsignal mit der Frequenz $f_1 - f_2$, das erste Meßsignal mit der Frequenz $f_1 - f_2 \pm 2\Delta f_{L_1}$ und ein aus drei Bits bestehendes Regel- oder Auswählcodesignal anspricht, das durch den Rechner 92 entsprechend einem Nullabgleichssignal vom Komparator 100 abgegeben wird, um ein Regelsignal zur Positionierung in der nachfolgend beschriebenen Weise zu erzeugen. In ähnlicher Weise ist die Regelschaltung 94 mit einem Phasenregelkreis 114' versehen, der auf das Referenzsignal mit der Frequenz $f_1 - f_2$, das zweite Meßsignal mit der Frequenz $f_1 - f_2 \pm 2\Delta f_{L_2}$ und ein anderes aus drei Bits bestehendes Regel- oder Wählcodesignal anspricht, das vom Rechner 92 entsprechend einem Nullvergleichssignal vom Komparator 100' abgegeben wird, um ein anderes Positionierungsregelsignal in der noch zu beschreibenden Weise zu erzeugen. Diese drei Positionsregelsignale werden einem Paar von Eingängen einer Summierschaltung 116 der Regelschaltung 96 für die X-Achsenposition zugeführt, um ein Ausgangsspannungssignal zu erzeugen, welches der Summe der Positionsregelsignale entspricht. Sie werden auch einem Paar Eingängen einer Summierschaltung 116' in der Regelschaltung 94 für die X-Achsenposition zugeführt, um ein Ausgangsspannungssignal zu erzeugen, welches der Differenz der Positionsregelsignale entspricht. Bei Nullabgleichssignalen von den Komparatoren 100 und 100' betätigt der Rechner 92 die Wählschaltungen 109 und 109', und die Ausgangsspannungssignale von den Summierschaltungen 116 und 116' werden den Servotreiberschaltungen 110 bzw. 110' zugeführt. Dadurch werden diese Servomotoren 112 und 112' für die X- und Y-Achsen gespeist und bewegen die obere Plattform 20 der Stufe 10 genau in die gewünschten X- und Y-Achsenpositionen.

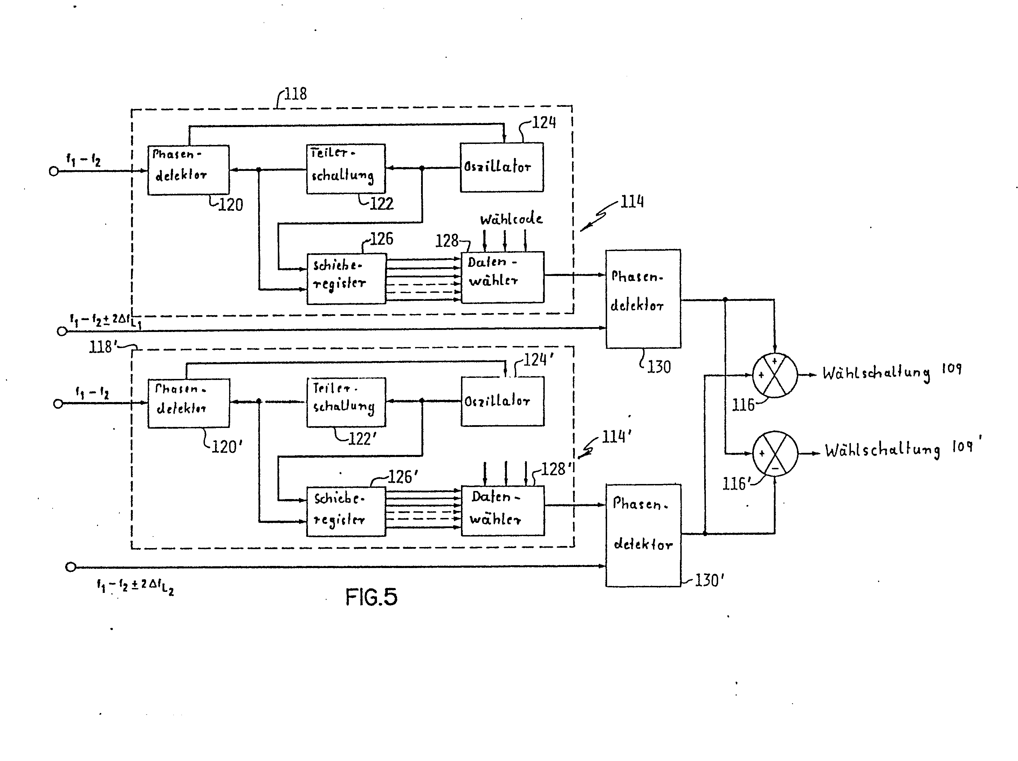

Aus Figur 5 geht ein Blockschaltbild der Phasenregelschaltungen 114 und 114' für die Regelschaltkreise 96 und 94 für die X- und Y-Positionen aus Figur 4 hervor. Da diese Phasenregelschaltkreise 114 und 114' identisch sind, werden für die gleichen Elemente beider Phasenregelschaltungen die gleichen Bezugszeichen verwendet, wobei diejenigen für die Phasenregelschaltung 114 der X-Achsenpositionierungsregelschaltung 94 in Figur 4 mit einem Strich versehen sind, und nur die Phasenregelschaltung 114 für die Regelschaltung 96 für die Y-Achsenposition gemäß Figur 4 im einzelnen beschreiben wird.

Die Phasenregelschaltung 114 enthält einen steuerbaren Phasenschieber 118, der das Referenzsignal mit der Frequenz $f_1 - f_2$ aufnimmt und ein Ausgangssignal mit der gleichen Frequenz erzeugt, welches bezüglich der Phase verschoben ist entsprechend dem aus drei Bit bestehenden Wählcode vom Rechner 92. Dieser Phasenschieber enthält einen Phasendetektor 120 mit einem ersten Eingang, dem das Referenzsignal mit der Frequenz $f_1 - f_2$ zugeführt wird, und einem zweiten Eingang, dem ein Ausgangssignal vom einer Teilerschaltung 122 mit dem Teiler N zugeführt wird, wie noch erläutert wird. Entsprechend diesen Eingangssignalen führt der Phasendetektor 120 einem mittels einer Spannung steuerbaren Oszillator 124 ein Ausgangsspannungssignal derart zu, daß der Oszillator gespeist wird und ein Ausgangssignal mit einer Frequenz erzeugt, welche N mal größer als die Frequenz $f_1 - f_2$ des Referenzsignals ist. Dieses Ausgangssignal von dem Oszillator 124 wird einem Eingang der Teilerschaltung 122 und einem Takteingang eines Schieberegisters 126 zugeführt.

Die Teilerschaltung 122 teilt dieses Ausgangssignal durch N, wobei zum Zwecke der Erläuterung von einem Wert von acht ausgegangen wird, und führt das resultierende Ausgangssignal dem zweiten Eingang des Phasendetektors 120 und auch einem Dateneingang des Schieberegister 126 zu. Entsprechend den zugeführten Ausgangssignalen von der Teilerschaltung 122 und dem Oszillator 124 führt das Schieberegister 126 N (oder acht) Ausgangssignale mit verschiedener Phase (wobei sich der Phasenwert jedes dieser Signale von demjenigen des vorhergehenden Signales um 360°/N oder um 45° unterscheidet) einem Datenwähler 128 zu. Der Datenwähler 128 führt ein ausgewähltes dieser Ausgangssignale vom Schieberegister 126 dem Ausgang des steuerbaren Phasenschiebers 118 zu entsprechend dem aus drei Bit bestehenden Wählcodesignal, welches vom Rechner 92 zugeführt wird bei einem Nullabgleichssignal vom Komparator 100. Wie vorher ausgeführt wurde, hat das ausgewählte Ausgangssignal die gleiche Frequenz $f_1-f_2$ wie das Referenzsignal.

Die Phasenregelschaltung 114 enthält auch einen Phasendetektor 130 mit einem ersten Eingang, bei dem das gewählte Ausgangssignal, d.h. das Ausgangssignal mit der gewünschten Phasenverschiebung, der Frequenz $f_1-f_2$ von dem steuerbaren Phasenschieber 118 zugeführt wird, sowie einen zweiten Eingang, dem das erste Meßsignal mit der Frequenz $f_1-f_2 \pm 2\,\Delta f_{L_1}$ zugeführt wird. Entsprechend diesen Signalen gibt der Phasendetektor 130 ein Positions-Steuersignal an einen Eingang von jeder der Summierschaltungen 116 und 116' in der beschriebenen Weise ab, wobei dieses Signal proportional der Differenz der Phase der Eingangssignale ist. In ähnlicher Weise sprechen der steuerbare Phasenschieber 118' und der Phasendetektor 130' der Phasenregelschaltung 114' auf das Referenzsignal mit der Frequenz $f_1-f_2$ auf das andere aus drei Bits bestehende Wählcodesignal vom Rechner 92 und auf das zweite Meßsignal mit der Frequenz $f_1-f_2 \pm 2\,\Delta f_{L_2}$ an und geben ein anderes Positionsregelsignal, welches proportional der Phasendifferenz zwischen dem ausgewählten Ausgangssignal vom steuerbaren Phasenschieber 118' und dem zweiten Meßsignal ist, an den anderen Eingang jeder der Summierschaltungen 116 und 116' ab. Die Summe und die Differenz dieser drei Positionsregelsignale werden den Wählschaltungen 109 und 109'der Regelschaltkreise 96 bzw. 94 für die X- und Y-Achsenposition gemäß Figur 4 zugeführt, um das Auflösungsvermögen dieser Positionsregelschaltungen in der beschriebenen Weise zu erweitern.

**0113424**

Sckellstrasse 1
D-8000 München 80
Telefon (089) 4 48 24 96

Telex 5 214 382 pall d
Telekopierer (089) 27 20 4 80, 27 20 4 81
Telegramme patemus münchen

Postscheck München 394 18-802
Hypobank München 6 400 194 333
Reuschelbank München 2 603 007

OPTIMETRIX CORPORATION
Ausscheidung aus 80 101 195.8
EU 140 31


Positionsregelschaltung

---

Ansprüche


1. Positionsregelschaltung, g e k e n n z e i c h n e t. durch eine erste Vorrichtung (118) zum Erzeugen einer Phasendifferenz zwischen einem Referenzsignal. und einem darauf bezogenen Eingangssignal, das durch ein Regelsignal bestimmt ist, und eine zweite, mit der ersten Vorrichtung (118) gekoppelte Vorrichtung (130) zum Erzeugen eines Positionsregelsignales, das proportional zur Phasendifferenz zwischen dem Referenzsignal und dem Eingangssignal ist.

2. Positionsregelschaltung nach Anspruch 1, dadurch g e k e n n - z e i c h n e t, daß das Eingangssignal eine Frequenz aufweist, die auf die Frequenz des Referenzsignals bezogen ist.

3. Positionsregelschaltung nach Anspruch 2, dadurch g e k e n n - z e i c h n e t, daß die erste Vorrichtung (118) ein Ausgangsignal gleicher Frequenz wie das Referenzsignal und einer durch das Regelsignal bestimmten Phase erzeugt und daß die zweite Vorrichtung (130) aus dem Ausgangssignal der ersten Vorrichtung (118) und dem Eingangssignal ein Positionsregelsignal erzeugt, welches proportional der Phasendifferenz zwischen dem Eingangssignal und dem Ausgangssignal der ersten Vorrichtung (118) ist.

4. Positionsregelschaltung nach einem der Ansprüche 1 bis 3, dadurch g e k e n n z e i c h n e t, daß die erste Vorrichtung einen steuerbaren Phasenschieber (118) und die zweite Vorrichtung einen Phasendetektor (130) umfassen.

5. Positionsregelschaltung nach Anspruch 4, dadurch g e k e n n - z e i c h n e t, daß der steuerbare Phasenschieber (118) einen spannungsgesteuerten Oszillator (124) zur Erzeugung eines Ausgangssignals mit einer Frequenz aufweist, die N-mal größer als die Frequenz des Referenzsignals $(f_1-f_2)$ ist, daß eine Teilerschaltung (122) mit dem Oszillator (124) zur Abgabe eines Ausgangssignals mit einer Frequenz verbunden ist, die gleich der Frequenz des Oszillator-Ausgangssignals geteilt durch N ist, daß ein anderer Phasendetektor (120) mit der Teilerschaltung (122) und dem Oszillator (124) verbunden ist und auf das Ausgangssignal von der Teilerschaltung und das Referenzsignal $(f_1-f_2)$ zur Speisung des Oszillators anspricht, so daß dieser ein Ausgangssignal mit einer Frequenz abgibt, die N-mal größer als die Frequenz des Referenzsignals ist, daß ein Schieberegister (126) mit dem Oszillator (124) und dem letztgenannten Phasendetektor (120) zur Abgabe von N Ausgangssignalen mit verschiedener Phase verbunden ist und daß ein Datenwähler (128) mit dem Schieberegister (126) und dem erstgenannten Phasendetektor (130) verbunden ist und auf das Regelsignal (Wählcode) anspricht, um ein ausgewähltes Ausgangssignal aus dem Schieberegister abzugeben, welches durch das Regelsignal für den erstgenannten Phasendetektor bestimmt ist.

6. Positionsregelschaltung nach Anspruch 4 oder 5 zum Positionieren einer bewegbaren Anwendungseinrichtung, wie einer Plattform g e - k e n n z e i c h n e t durch einen auf das Referenzsignal und das darauf bezogene Eingangssignal reagierenden Zähler (98) zum Erzeugen eines Ist-Positionssignals, ein Register (102) zum Empfangen eines Soll-Positionssignales, einen mit dem Zähler und dem Register gekoppelten Vergleicher (100) zum Erzeugen einer Abweichung aus dem Ist- und dem Soll-Positionssignal, eine mit dem Vergleicher (100) gekoppelte Regelvorrichtung (92,103,104, 106,108) zum Erzeugen eines Geschwindigkeitsregelsignals und einen Antrieb (109,110,112) mit dem Geschwindigkeitsregelsignal und dem Positionsregelsignal als Eingangsgrößen zum Bewegen der Anwendungseinrichtung in die gewünschte Position.

7. Positionsregelschaltung nach Anspruch 6, dadurch g e k e n n - z e i c h n e t, daß der Zähler (98) ein weiteres Eingangssignal zum Erzeugen des Ist-Positionssignals erhält, daß dieses weitere Eingangssignal ebenfalls auf das Referenzsignal bezogen ist, daß eine Verknüpfungsvorrichtung (116) mit dem Phasendetektor (130) zum Kombinieren des Positionsregelsignals mit einem anderen Positionsregelsignal gekoppelt ist, welches proportional zur Phasendifferenz zwischen dem Referenzsignal und dem anderen Eingangssignal ist, um ein kombiniertes Positionsregelsignal zu erzeugen, daß der Antrieb einen Motor (112) und eine mit dem Motor gekuppelte Servovorrichtung (110) aufweist, daß die Regelvorrichtung ferner ein Register (103) zum Empfangen von Soll-Geschwindigkeitssignalen, einen Tachometer (108) zum Erzeugen eines Ist-Geschwindigkeitssignales proportional zur Ist-Geschwindigkeit des Motors und einen Vergleicher (106) umfaßt, der mit dem zuletztgenannten Register (103) und dem Tachometer (108) zum Erzeugen von Geschwindigkeitssignalen gekoppelt ist, welche zur Differenz zwischen jedem Soll- und Ist-Geschwindigkeitssignal proportional sind, und daß der Antrieb eine mit dem zuletztgenannten Vergleicher (106) und der Verknüpfungsvorrichtung (116) gekoppelte Auswahlvorrichtung (109) zum selektiven Anlegen der Geschwindigkeits-Regelsignale und des kombinierten Positionsregelsignals an die Servovorrichtung (110) umfaßt, um den Motor zum Bewegen der Anwendungseinrichtung in die gewünschte Position zu betätigen.

8. Verfahren zum Verarbeiten eines Referenzsignals einer ersten Frequenz und eines Verlagerungs-Eingangsignals einer zweiten Frequenz, welche auf die Frequenz des Referenzsignals bezogen ist, zur Erzeugung eines Positionsregelsignals großer Auflösung, dadurch

g e k e n n z e i c h n e t, daß ein Phasenunterschied zwischen dem Referenzsignal und dem Verlagerungs-Eingangssignal erzeugt wird und daß die Phasendifferenz zwischen dem Referenzsignal und dem Verlagerungs-Eingangssignal erfaßt wird, um ein Positionsregelsignal zu erzeugen, welches proportional der Phasendifferenz ist.

9. Verfahren nach Anspruch 8, dadurch g e k e n n z e i c h ne t, daß das Positionsregelsignal mit einem anderen Positionsregelsignal kombiniert wird, welches proportional zu einer Phasendifferenz zwischen dem Referenzsignal und einem anderen Verlagerungs-Eingangssignal ist, um ein kombiniertes Positionsregelsignal zu erzeugen, welches gleich der Summe oder der Differenz dieser Positionsregel-signale ist.

FIG. 1

FIG. 2

$t_1 - t_2$

Ausgangs-mischer  auf / ab  82

$t_1 - t_2 \pm 2\Delta t_L$

Addier-schaltung  auf / ab  88

Zähler  98

$\Delta Y$

Kompa-rator  100

Y  Register  102

D/A-Um-setzer  104

+ −  106

Tacho  108

Y-Achse

Servotreiber  110

Y Motor  112

96

92  Rechner

110'  Servotreiber

112'  X Motor

104'  D/A-Umsetzer

+ −  106'

Tacho  108'

X-Achse

94

98'  Zähler

$\Delta X$

100'  Komparator

X  Register  102'

84

$t_1 - t_2$

Ausgangs-mischer  auf / ab

$t_1 - t_2 \pm 2\Delta t_{L_2}$

90  Addier-schaltung  auf / ab

FIG. 3

FIG. 4

0113424

FIG.5